# EUROPÄISCHE PATENTSCHRIFT

(11) **EP 2 995 184 B1**
(45) Veröffentlichungstag und Bekanntmachung des Hinweises auf die Patenterteilung: **03.01.2018**
(21) Anmeldenummer: 15401090.4
(22) Anmeldetag: 04.09.2015
(51) Int. Cl.: A01C 7/08, A01C 15/00

(54) **SÄMASCHINE**
SOWING MACHINE
SEMOIR

(30) Priorität: 10.09.2014 DE 102014113011
(43) Veröffentlichungstag der Anmeldung: 16.03.2016
(73) Patentinhaber: Amazonen-Werke H. Dreyer GmbH & Co. KG, 49205 Hasbergen (DE)
(72) Erfinder: Goretzko, Robert, 28309 Bremen (DE); Mertens, Daniel, 26121 Oldenburg (DE)

(56) Entgegenhaltungen:
- EP-A1- 1 514 465
- EP-A1- 2 052 595
- EP-A1- 2 769 609
- EP-A1- 2 777 375
- DE-A1-102008 037 782

## Beschreibung

Die Erfindung betrifft eine Sämaschine gemäß des Oberbegriffes des Patentanspruches 1.

Eine derartige Sämaschine ist in der DE 10 2008 037782 A1 beschrieben. Eine weitere Sämaschine ist in der Praxis bekanntgeworden. Diese Sämaschine weist einen Rahmen auf. An diesem Rahmen sind zumindest zwei gegenüber dem Rahmen mittels Schwenkgestänge aufweisende Schwenkvorrichtungen in zumindest eine Arbeitsstellung und in zumindest eine eingezogene Transportstellung verschwenkbare Querbalken mit daran befestigten Ausbringelementen angeordnet, wie beispielsweise die EP 2 777 375 A1 zeigt. Weiterhin sind an den Querbalken Vorratsbehälter aufweisende Einzelkornsäaggregate angeordnet. Außerdem kann noch vor den Einzelkornsäaggregaten und dem Schwenkgestänge ein Vorratsbehälter zur Aufnahme von Düngemittel angeordnet sein. Hinter und/oder oberhalb diesen als erste Vorratsbehälter bezeichneten Behälter ist beabstandet zu diesen ein als zweiter Vorratsbehälter bezeichneter Vorratsbehälter zur Aufnahme von Mikrogranulat am Rahmen der Sämaschine angeordnet. Diesem zweiten Vorratsbehälter ist ein von einem Luftstrom beaufschlagtes Dosiergehäuse zugeordnet. Die diesem Dosiergehäuse zugeleitete Luftströmung wird von einem Gebläse erzeugt. Hierbei ist das Gebläse über eine mit Druckluft beaufschlagte Luftzuleitung mit dem Dosiergehäuse verbunden. Weiterhin weist das Dosiergehäuse Abgangsöffnungen auf, an denen mit einer Luftströmung beaufschlagte Materialleitungen, die zu an den verschwenkbaren Querbalken angeordneten Ausbringelementen führen, angeschlossen sind. Das Dosiergehäuse mit den daran angeordneten Abgangsöffnungen befindet sich in Draufsicht gesehen hinter dem Schwenkgestänge und den daran angeordneten Querbalken. Die an den Abgangsöffnungen angeschlossenen Materialleitungen müssen nun zu den Ausbringelementen verlegt werden. Dieses ist insbesondere zu den an den von dem jeweiligen Schwenkgestänge einschwenkbaren Querbalken angeordneten Ausbringelementen schwierig und führt häufig zu Abquetschungen und Abknickungen der Materialleitungen. Hierdurch ist keine ausreichend sichere und gleichmäßige Materialzuführung von dem Dosiergehäuse zu den Ausbringelementen sichergestellt.
Der Erfindung liegt die Aufgabe zu Grunde, die Grundvoraussetzung für eine verbesserte Anordnung des zweiten Vorratsbehälters mit dem zugeordneten Dosiergehäuse und Verlegungsmöglichkeiten für die Materialleitungen von dem Dosiergehäuse zu den Ausbringelementen zu schaffen.
Diese Aufgabe der erfindungsgemäß dadurch gelöst, dass die von den Abgangsöffnungen zu den Ausbringelementen führenden Materialleitungen von den Abgangsöffnungen im mittleren Bereich der Sämaschine bis vor das Schwenkgestänge der Schwenkvorrichtungen und vor dem Schwenkgestänge entlang bis zu den jeweiligen Ausbringelementen geführt sind.
Infolge dieser Maßnahme wird die Grundvoraussetzung dafür geschaffen, dass in jedem Falle ein abknicken oder abquetschen der Materialleitungen bei einem Ein- oder Ausschwenken der Querbalken mit den daran angeordneten Ausbringelementen durch das Schwenkgestänge vermieden wird. Weiterhin wird erreicht, dass die Materialleitungen durch den mittleren Bereich der Sämaschine in zusammengefasster Weise von dem Dosiergehäuse zu den Ausbringleitungen bis vor die Schwenkvorrichtung für die Querbalken geführt werden können. Hierdurch ergibt sich eine verbesserte Verlegungsmöglichkeit für die Materialleitungen von dem Dosiergehäuse zu den Ausbringelementen.

In vorteilhafter Weise ist der zweite Vorratsbehälter mit dem zugeordneten Dosiergehäuse beabstandet zu dem ersten Vorratsbehälter und hinter dem Schwenkgestänge der Schwenkvorrichtungen angeordnet. In besonders vorteilhafter Weise ist zur Erreichung des erfindungsgemäßen Ziels vorgesehen, dass die Materialleitungen im mittleren Bereich bezüglich des Schwenkbereiches der Schwenkgestänge der Schwenkvorrichtungen und der Querbalken und der daran befestigten Ausbringelemente so verlegt sind, dass die Materialleitungen die Schwenkbewegungen nicht behindern und/oder gefährdet sind.

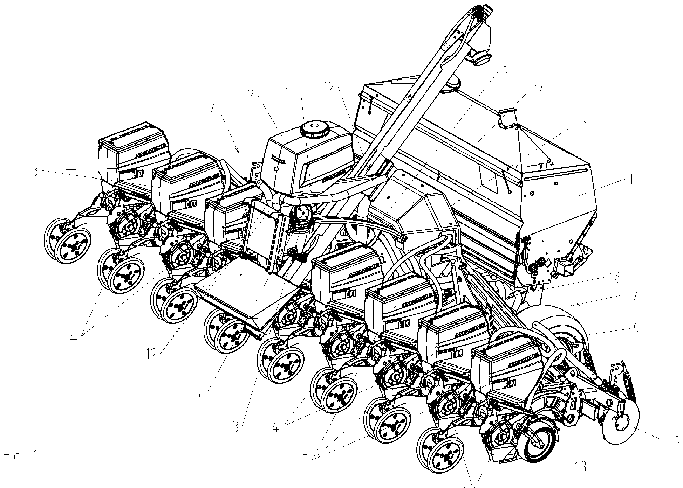

Weitere Einzelheiten der Erfindung sind der Beispielsbeschreibung und den Zeichnungen zu entnehmen. Die Zeichnungen zeigen
- Fig.1: eine erfindungsgemäß ausgestaltete Sämaschine in perspektivischer Ansicht von schräg seitlich hinten,

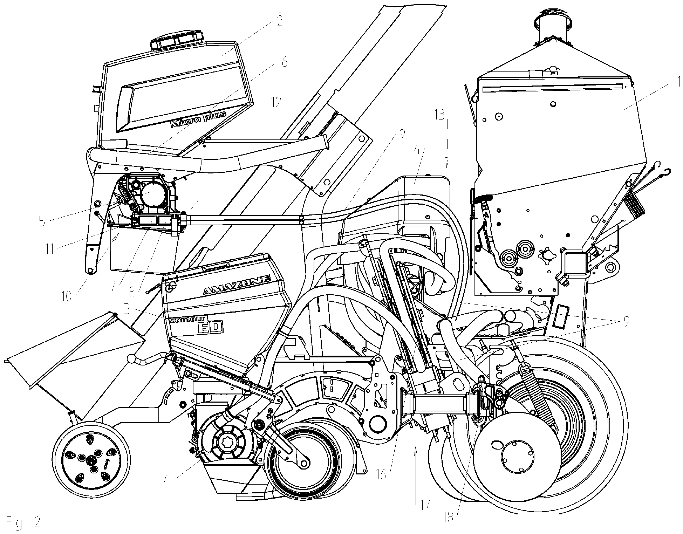

- Fig.2: die Anordnung der Materialleitungen von dem Dosiergehäuse zu den an den ein schwenkbaren Querbalken angeordneten Ausbringelementen in Bezug zu dem Schwenkgestänge in Seitenansicht und

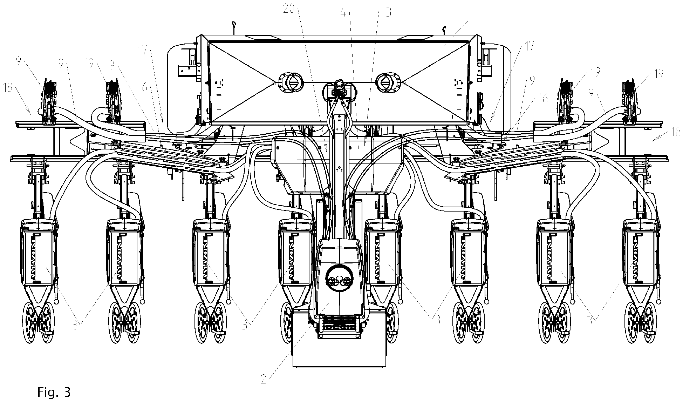

- Fig.3: die Anordnung der Materialleitungen von dem Dosiergehäuse zu den an den ein schwenkbaren Querbalken angeordneten Ausbringelementen in Bezug zu dem Schwenkgestänge in Draufsicht.

Die als Einzelkornsämaschine ausgebildete Sämaschine weist den ersten, d.h. vorderen Vorratsbehälter 1 zur Aufnahme von Düngemitteln, den zweiten, d.h. hinteren Vorratsbehälter 2 zur Aufnahme von Microgranulat und eine Vielzahl von in einer Reihe angeordneten Vorratsbehältern 3 für die Einzelkornsäaggregate 4 auf. Die Vorratsbehälter 1 und 2 sowie die Einzelkornsäaggregate 4 sind an dem nicht im einzelnen dargestellten Rahmen der Sämaschine in bekannter Weise angeordnet. Im hinteren Bereich der Sämaschine ist der Vorratsbehälter 2 zur Aufnahme von Microgranulat angeordnet. An den unteren Bereich 6 dieses Vorratsbehälters 2 schließt sich das Dosiergehäuse 5 an. In dem Gehäuse 5 befindet sich ein nicht näher dargestelltes Dosierorgan, um das sich in den Vorratsbehälter 2 befindliche Material, hier Microgranulat in die sich an den unteren Bereich 6 des Dosiergehäuses 5 anschließenden Abgangsöffnungen 7 aufweisenden Abgangsleitungen 8, an denen zu nicht dargestellten Ausbringelementen führende Materialleitungen 9 angeschlossen sind.

Das Dosiergehäuse 5 weist auf seiner Rückseite 10 Lufteinlassöffnungen 11, die mit den Abgangsleitungen 8 und den Abgangsöffnungen 7 in Verbindung stehen, auf. An den Lufteinlassöffnungen 11 sind die beiden Luftzuleitungen 12 angeschlossen. Die Luftzuleitungen 12 sind an dem Druckluftanschluss eines Gebläses 13, das unter der Abdeckungshaube 14 angeordnet ist, angeschlossen. Das Gebläse 13 befindet sich also vor dem hier als zweiten Vorratsbehälter 2 bezeichneten Behälter, der zur Aufnahme von Microgranulat vorgesehen ist. Die an dem Gebläse 13 angeschlossene Luftzuleitungen 12 für das Dosiergehäuse 5 sind auf der Rückseite 10 des Dosiergehäuses 5 des zweiten Vorratsbehälters 2 an die Lufteinlassöffnungen 11 dieses Dosiergehäuses 5 angeschlossen. Die Luftzuleitungen 12 weisen im Bereich des Dosiergehäuses 5 jeweils zumindest einen annähernd 180° Krümmungsbereich 15 auf. Die Luftzuleitungen 12 sind seitlich an dem zweiten Vorratsbehälter 2 und dem zugeordneten Dosiergehäuse 5 vorbei von vorne nach hinten geführt. Im Ausführungsbeispiel sind zwei Luftzuleitungen 12 für das Dosiergehäuse 5 des zweiten Vorratsbehälters 2 vorgesehen. Hierbei ist die eine Luftzuleitung 12 auf der einen Seite seitlich an dem zweiten Vorratsbehälter 2 und dem zugeordnetem Dosiergehäuse 5 und die andere Luftzuleitung 12 auf der einen Seite seitlich an dem zweiten Vorratsbehälter 2 und dem zugeordnetem Dosiergehäuse 5 vorbei von vorne nach hinten geführt ist.

Der zweite Vorratsbehälter 2 ist hinter und beabstandet zu dem vorderen ersten Vorratsbehälter 1 sowie oberhalb der den Einzelkornsäaggregate 4 zugeordneten Vorratsbehältern 3 angeordnet. Des Weiteren ist der zweite Vorratsbehälter 2 mit dem zugeordneten Dosiergehäuse 5 hinter dem Schwenkgestänge 16 der Schwenkvorrichtungen 17 angeordnet ist. Das eine Ende des jeweiligen Schwenkgestänges 16 ist an dem Rahmen der Sämaschine angelenkt, während das andere Ende des jeweiligen Schwenkgestänges 16 an dem jeweiligen Querbalken 18, an dem die Ausbringelemente 19 angeordnet sind.

Die von den Abgangsöffnungen 7 zu den Ausbringelementen 19 führenden Materialleitungen 9 sind von den Abgangsöffnungen 7 im mittleren Bereich 20 der Sämaschine bis vor das Schwenkgestänge 16 der Schwenkvorrichtungen Zellen und vor dem Schwenkgestänge 16 entlang bis zu den jeweiligen Ausbringelementen 19 geführt. Hierbei sind die Materialleitungen 9 im mittleren Bereich 20 zumindest außerhalb der Schwenkbereiches der Schwenkgestänge 16 der Schwenkvorrichtungen 17 und der Querbalken 18 und der daran befestigten Ausbringelemente 19 verlegt. Somit wird in einfacher Weise ein abknicken oder abquetschen der Materialleitungen 9 im Bereich der Schwenkvorrichtung 17 durch das Verschwenken der Querbalken 18 mit den daran angeordneten Ausbringelementen 19 und Einzelkornsäaggregaten durch die Schwenkvorrichtung 17 vermieden.

## Patentansprüche

1. Sämaschine mit einem Rahmen und zumindest einem ersten Vorratsbehälter (1) und zumindest einem hinter und/oder oberhalb dem ersten Vorratsbehälter (2) angeordneten zweiten Vorratsbehälter (2) mit zumindest einem pneumatisch beaufschlagten Dosierer (5) zum Einbringen von landwirtschaftlichen Materialien, insbesondere Mikrogranulat in einen Luftstrom mit einem Dosiergehäuse (5), welches zumindest eine Lufteinlassöffnung (11), an welche zumindest eine von einem Gebläse (13) mit Druckluft beaufschlagte Luftzuleitung (12) angeschlossen ist, und Abgangsöffnungen (7) aufweist, an denen mit einer Luftströmung beaufschlagte Materialleitungen (9), die zu Ausbringelementen (19) führen, angeschlossen sind, wobei an dem Rahmen zumindest zwei gegenüber dem Rahmen mittels Schwenkgestänge (16) aufweisende Schwenkvorrichtungen (17) in zumindest eine Arbeitsstellung und in zumindest eine eingezogene Transportstellung verschwenkbare Querbalken (18) mit daran befestigten Ausbringelementen (19) angeordnet sind, wobei der zweite Vorratsbehälter mit dem zugeordneten Dosiergehäuse (5) hinter dem Schwenkgestänge (16) der Schwenkvorrichtungen (17) angeordnet ist, **dadurch gekennzeichnet, dass** die von den Abgangsöffnungen (7) zu den Ausbringelementen (19) führenden Materialleitungen (9) von den Abgangsöffnungen (7) im mittleren Bereich (20) der Sämaschine bis vor das Schwenkgestänge (16) der Schwenkvorrichtungen (17) und vor dem Schwenkgestänge (16) entlang bis zu den jeweiligen Ausbringelementen (19) geführt sind.

2. Sämaschine nach Anspruch 1, **dadurch gekennzeichnet, dass** die Materialleitungen (9) im mittleren Bereich (20) bezüglich des Schwenkbereiches der Schwenkgestänge (16) der Schwenkvorrichtungen (17) und der Querbalken (18) und der daran befestigten Ausbringelemente (19) so verlegt sind, dass die Materialleitungen (9) die Schwenkbewegungen nicht behindern und/oder gefährdet sind.

## Claims

1. Sowing machine with a frame and at least one first storage container (1) and at least one second storage container (2) which is arranged behind and/or above the first storage container (2) and has at least one pneumatically charged metering device (5) for introducing agricultural materials, in particular microgranules, into an air stream, with a metering housing (5) which has at least one air inlet opening (11), to which at least one air feed line (12) charged with compressed air by a fan (13) is connected, and outlet openings (7), to which material lines (9) which are charged with an air flow and lead to discharge elements (19) are connected, wherein at least two cross bars (18) having discharge elements (19) fastened thereto are arranged on the frame, said cross bars (18) being pivotable in relation to the frame by means of pivot devices (17), which have pivot linkages (16), into at least one working position and into at least one retracted transport position, wherein the second storage container with the assigned metering housing (5) is arranged behind the pivot linkage (16) of the pivot devices (17), **characterized in that** the material lines (9) leading from the outlet openings (7) to the discharge elements (19) are guided from the outlet openings (7) in the central region (20) of the sowing machine as far as to in front of the pivot linkage (16) of the pivot devices (17) and along in front of the pivot linkage (16) as far as the respective discharge elements (19).

2. Sowing machine according to Claim 1, **characterized in that** the material lines (9) are laid in the central region (20) with respect to the pivoting range of the pivot linkages (16) of the pivot devices (17) and of the cross bars (18) and of the discharge elements (19), which are fastened to the latter, in such a manner that the material lines (9) do not obstruct the pivoting movements and/or are at risk.

## Revendications

1. Semoir comprenant un cadre et au moins un premier réservoir (1) et au moins un deuxième réservoir (2) disposé derrière et/ou au-dessus du premier réservoir (2) avec au moins un dispositif de dosage (5) sollicité pneumatiquement pour introduire des matières agricoles, en particulier des microgranules dans un flux d'air, avec un boîtier de dosage (5) qui présente au moins une ouverture d'entrée d'air (11) au niveau de laquelle est raccordée au moins une conduite d'alimentation en air (12) sollicitée avec de l'air sous pression par une soufflante (13) et des ouvertures de sortie (7) au niveau desquelles sont raccordées des conduites de matière (9) sollicitées avec un écoulement d'air, qui conduisent à des éléments de distribution (19), au moins deux poutres transversales (18) avec des éléments de distribution (19) fixés à celles-ci, pouvant pivoter par rapport au cadre dans au moins une position de travail et dans au moins une position de transport rentrée, au moyen de dispositifs de pivotement (17) présentant une tringlerie de pivotement (16), étant disposées au niveau du cadre, le deuxième réservoir avec le boîtier de dosage associé (5) étant disposé derrière la tringlerie de pivotement (16) des dispositifs de pivotement (17), **caractérisé en ce que** les conduites de matière (9) allant des ouvertures de sortie (7) aux éléments de distribution (19) sont guidées depuis les ouvertures de sortie (7) dans la région centrale (20) du semoir jusque devant la tringlerie de pivotement (16) des dispositifs de pivotement (17) et devant et le long de la tringlerie de pivotement (16) jusqu'aux éléments de distribution respectifs (19).

2. Semoir selon la revendication 1, **caractérisé en ce que** les conduites de matière (9) sont posées dans la région centrale (20) par rapport à la région de pivotement de la tringlerie de pivotement (16) des dispositifs de pivotement (17) et de la poutre transversale (18) et des éléments de distribution (19) fixés à celle-ci de telle sorte que les conduites de matière (9) ne gênent pas les mouvements de pivotement et/ou ne risquent pas d'être endommagées.
